(19) Europäisches Patentamt
European Patent Office
Office européen des brevets

(11) Publication number: **0 264 260 A2**

(12) **EUROPEAN PATENT APPLICATION**

(21) Application number: 87309039.3

(22) Date of filing: 13.10.87

(51) Int. Cl.[4]: **C 08 F 12/32**
C 08 F 283/14

(30) Priority: 13.10.86 JP 242836/86
13.10.86 JP 242837/86

(43) Date of publication of application:
20.04.88 Bulletin 88/16

(84) Designated Contracting States: DE FR GB

(71) Applicant: NIPPON OIL CO. LTD.
3-12, Nishi Shimbashi 1-chome
Minato-ku Tokyo (JP)

(72) Inventor: Sasaki, Makoto
338, Iwai-cho Hodogaya-ku
Yokohama-shi Kanagawa-ken (JP)

Tsuchiya, Shozo
2-10-8, Minami Meguro-Ku
Tokyo (JP)

(74) Representative: Ablewhite, Alan James et al
MARKS & CLERK 57/60 Lincoln's Inn Fields
London WC2A 3LS (GB)

(54) **Production of polysubstituted norbornenes.**

(57) A process is disclosed for the production of polysubstituted norbornenes from 5-vinylbicyclo(2,2,1)hept-2-ene and/or 5-ethylidenebicyclo(2,2,1)hept-2-ene. Rigidity and impact resistance are greatly improved by the use of a selected mode of reactive injection molding and specified amounts of a selected class of catalysts, activators and regulators.

EP 0 264 260 A2

**Description**

PRODUCTION OF POLYSUBSTITUTED NORBORNENES

This invention relates to a process suitable for use in the polymerization of 5-vinylbicyclo(2,2,1)hept-2-ene and/or 5-ethylidenebicyclo(2,2,1)hept-2-ene and more particularly to a process for producing polysubstituted norbornenes by employing a selected mode of reactive injection molding and a selected catalyst therefor.

It is known that plastic moldings can be produced by reactive injection molding hereinafter referred to as "RIM". In such instance, two or more monomeric materials are combined and then cure-reacted in a mold. Most commonly used is a mode of RIM for forming urethanes from diisocyanates and diols. However, this prior art method is not quite satisfactory partly because urethane products lack sufficient rigidity and partly because it is processwise difficult to reduce curing temperature and injection pressure to a desired extent.

Another mode of RIM has been proposed in which dicyclopentadiene is polymerized in the pressure of a double-decomposing catalyst as disclosed for instance in Japanese Patent Laid-Open Publication Nos. 58-129013 and 58-206661. This method in effect permits the formation of polydicyclopentadiene having a good balance of rigidity and impact resistance at reduced molding temperature and pressure. Such polymeric material however is still inadequate in impact resistance on application for example to chassis and other exterior parts of automotive vehicles where impact stresses are pronounced.

It has now been found that polysubstituted norbornenes of superior physical properties can be obtained by the use of a selected mode of reactive injection molding of 5-vinylbicyclo(2,2,1)hept-2-ene and/or 5-ethyl-idenebicyclo(2,2,1)hept-2-ene in the presence of a selected class of catalysts, activators and regulators.

It is therefore the primary object of the invention to provide an improved process for the production of polysubstituted norbornenes which can be effected at reduced curing temperature and injection pressure and which norbornens can exhibit excellent rigidity and impact resistance characteristics.

This and related objects and advantages of the invention will be better understood from the following description.

According to the invention, there is provided a process for producing a polysubstituted norbornene which comprises the step of: (a) combining a first reactive solution comprising a double-decomposing catalyst with a second reactive solution comprising an activator and a regulator, at least either one of the first and second solutions containing 5-vinylbicyclo(2,2,1)hept-2-ene and/or 5-ethylidenebicyclo(2,2,1)hept-2-ene; and the step of (b) charging and polymerizing the admixture in a mold.

The process of the invention for producing polysubstituted norbornenes is characterized by the use of reactive injection molding in which are polymerized two different reactive solutions, one comprising a double-decomposing catalyst and hereinafter called "solution A", and the other comprising an activator and a regulator and hereinafter called "solution B".

5-Vinylbicyclo(2,2,1)hept-2-ene hereinafter referred to as "VBH" and 5-ethylidenebicyclo(2,2,1)hept-2-ene hereinafter referred to as "EBH" are the reactants contemplated under the invention. VBH and EBH may be used alone or in combination and incorporated in either, preferably both, of solutions A and B.

VBH is a compound resulting from the Diels-Alder reaction of cyclopentadiene with 1,3-butadiene and represented by the formula:

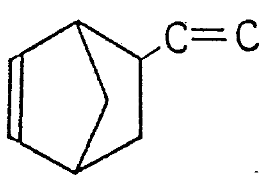

EBH is a compound derived by the isomerization of VBH and represented by the formula:

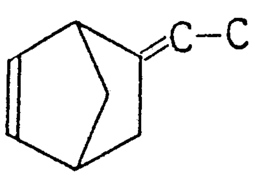

A dicyclopentadiene polymer may also be used as a coreactant in either or both of solutions A and B. This polymer is a homopolymer or copolymer resulting from homopolymerizing cyclopentadiene, dicyclopentadiene or an alkylsubstituted derivative thereof, or from copolymerizing the same monomer with an unsaturated hydrocarbon compound, with heat or in the presence of a cationic catalyst such as $BF_3 \bullet OPh_2$ or $AlCl_3$.

Copolymerizable hydrocarbon compounds typically include aromatic olefins such as styrene, vinyltoluene, indene and the like, aliphatic olefins such as isoprene, piperylene and the like, and alicyclic olefins such as cyclopentene and the like.

Number average molecular weights of the dicyclopenta-diene polymer suitably range from 400 to 1,500. The amount of the coreactant to be added should be in the range of 2 to 100 parts, preferably 5 to 70 parts, by weight based on 100 weight parts of VBH and/or EBH. Smaller amounts than 2 parts would fail to give sufficient ridigity, whereas larger amounts than 100 parts would build too high viscosity, leading to charging difficulties and also to a sharp decline in impact resistance.

By "double-decomposing catalyst" is meant a catalyst capable of inducing a metathesis reaction in which two olefins of varying elements are allowed to rearrange, through transient ring formation of one four-element complex, to two totally different olefins as indicated by the following formula:

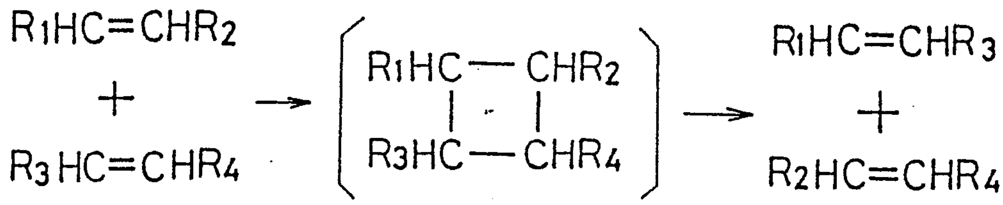

Certain cyclic olefins can undergo metathesis, leading to enlarged ring as shown below:

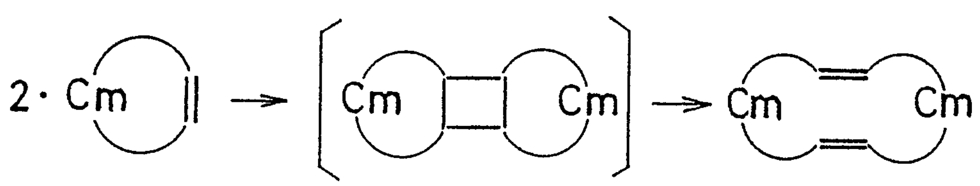

Double-decomposing catalysts eligible for the purpose of the invention are tungsten compounds, specific examples of which include tungsten hexachlorid and oxytungsten tetrachlorid. Liquid tungsten compounds are obtainable by suspension in inert solvents such as benzene, toluene, chlorobenzene and hexane, or by solubilization in small amounts of alcohols or phenolic compounds. Particularly preferred is the treatment of solubilization using a phenolic compound selected for example from p-tert-butyl-phenol, p-tert-octylphenol and p-nonylphenol in which instance the mole ratio of phenolic compound to tungsten compound is in the range of 1:1 to 3:1.

The mole ratio of catalyst to VBH and/or EBH should be between 1:1,000 and 1:15,000, preferably between 1:2,000 and 1:5,000.

In the case where VBH and/or EBH are present in solution A, a chelate compound or Lewis base may be added to prevent the reactants from getting polymerized on contact with the catalyst. Chelate compounds are selected for example from acetylacetone, acetoacetic alkylate esters and the like. Lewis bases include for example nitriles such as benzonitrile and the like, and ethers such as tetrahydrofuran and the like.

By "activator" is meant an additive serving to activate the catalyst. Activators useful in the invention are organoaluminum compounds including for example trialkylaluminums such as triethylaluminum, triisobutylaluminum and the like, dialkylaluminum chlorides such as diethylaluminum chloride, diisobutylaluminum chloride and the like, and alkylaluminum dichlorides such as ethylaluminum dichloride, n-butylaluminum dichloride and the like. Most preferred is diethylaluminum chloride. Two or more of these organoaluminum compounds may be used in combination.

The mole ratio of activator to VBH and/or EBH should be between 1:100 and 1:2,000, preferably between 1:200 and 1:500. The mole ratio of activator to catalyst should be in the range of 2:1 to 20:1, preferably 5:1 to 10:1.

The term "regulator" designates a chemical agent useful in prohibiting instantaneous reaction of solutions A and B when combined. Eligible regulators include for example esters such as ethyl benzoate and the like, ethers such as isopropyl ether, butyl ether and the like, ketones such as methyl ethyl ketone, methyl isobutyl ketone and the like, nitriles such as benzonitrile and the like, and alcohols such as ethanol, n-propanol and the like, amongst which ethyl benzoate and butyl ether are particularly preferred.

The mole ratio of regulator to activator should be in the range of 1.5:1 to 5:1.

Other various additives may also be employed, provided that they do not interfere with the polymerization reaction of the invention, to provide a wide variety of polysubstituted norbornene products.

For instance, fillers such as glass, carbon black, talc and the like may give enhanced rigidity, hence reduced molding shrinkage. Elastomers or plasticizers may be effective for improving impact resistance, which elastomers may be selected from natural rubber, isoprene rubber, styrene-butadiene rubber and the like and

which plasticizers from dihexyl phthalate, dioctyl phthalate and the like. Phenolic or amine antioxidants, selected suitably from 2,6-tert-butyl-p-cresol, N,N'-diphenyl-p-phenylenediamine and the like, may render the resulting norbornene products immune to oxidation at their unsaturated moieties.

The process of the invention may be effected by preparing solutions A and B independently, at least one of which contains VBH and/or EBH, admixing both solutions, and rapidly charging and polymerizing the admixture in a mold preheated at a predetermined temperature.

Each of the components for use in the reaction should be stored or otherwise handled in nitrogen or inert gas atmosphere substantially free of oxygen and moisture. The presence of oxygen and moisture tends to adversely affect polymerization reactions initiated by a double-decomposing catalyst.

Reaction temperature and time respectively may be 35° to 150°C, preferably 50° to 100°C, and 10 seconds to 5 minutes, preferably 30 seconds to 2 minutes. Upon release of the molded article from the mold, post-curing may be effected usually at 150° to 200°C, preferably 160° to 190°C for 10 minutes to one hour, more preferably for 20 to 40 minutes, to improve the final product properties with residual malodor held to a minimum.

Prior to initiation of the reaction, solutions A and B may be cooled or heated at reduced temperature, preferably below 50°C, at which they do not polymerize even when combined. This pre-treatment enables solutions A and B to be maintained at an optimum viscosity level to facilitate admixing or charging of the solutions.

The following examples are provided for a better understanding of the invention, but should not be regarded as limiting the invention thereto.

Example 1

(a) Preparation of Catalyst and Activator

In nitrogen atmosphere 92 ml of anhydrous toluene was intermixed with 4.0 g of tungsten hexachloride, followed by addition of 1.64 g of p-tert-butylphenol dissolved in 6 ml of anhydrous toluene. The mixture was nitrogen-purged overnight to give a liquid catalyst containing 0.1 mole of tungsten.

To 25.9 ml of anhydrous toluene wad added 7.7 ml of diethylaluminum chloride in nitrogen atmosphere to thereby give a liquid activator containing 1.8 moles of the latter compound.

(b) Preparation of Solution A and Solution B

In nitrogen atmosphere 114.1 ml of anhydrous VBH was added with 0.2 ml of benzonitrile and 7.2 ml of the catalyst provided in item (a) of this Example, thereby obtaining solution A.

Solution B resulted from intermixing 114.1 ml of anhydrous VBH with 1.2 ml of isopropyl ether and 2.4 ml of the above activator in nitrogen atmopshere.

(c) Polymerization/Molding

Solutions A and B were combined in nitrogen atmosphere, followed by rapid charge in a mold preheated at 70°C and by subsequent polymerization at this temperature for one minute. The molded article was released from the mold and then post-cured at 120°C for 30 minutes.

The resulting polysubstituted norbornene sample was tested for bending strength, bending modulus and Izod impact strength with the results shown in Table 1.

Example 2

The procedure of Example 1 was followed except that 107.5 ml of anhydrous EBH was used in place of VBH in each of solutions A and B, thereby obtaining a norbornene sample having the properties tabulated.

Example 3

The procedure of Example 1 was followed except that VBH was replaced with 107.5 ml of anhydrous EBH in solution B. There was obtained a norbornene sample with the properties tabulated.

Example 4

The procedure of Example 1 was followed except that solution A was further added with 15 g of liquid isoprene rubber tradenamed LIR-30 and manufactured by Kuraray Co., Ltd. The resulting norbornene sample showed the properties tabulated.

Comparative Example 1

The procedure of Example 1 was followed except that 98.5 ml of anhydrous dicyclopentadiene was substituted for VBH in each of solutions A and B, thereby obtaining a norbornene sample with the properties tabulated.

Comparative Example 2

The procedure of Comparative Example 1 was followed except that solution A was further added with 15 g of the same isoprene rubber as was in Example 4. The resulting norbornene sample showed the properties tabulated.

As appears clear from Table 1, Examples 1 to 4 representing the invention and using VBH and/or EBH are all satisfactory in respect of all physical properties tested as compared to Comparative Examples 1 and 2 in which dicyclopentadiene was used. Example 4 having added an elastomer notably excels in impact resistance.

Example 5

(a) Synthesis of Dicyclopentadiene Polymer

Into an autoclave were charged 500 g of 96% pure dicyclopentadiene and 500 g of mixed xylene, followed by reaction with stirring at 260°C for 1.5 hours. The autoclave was cooled on completion of the reaction. Unreacted monomers, low polymers and xylenes were removed from the reaction mixture by distillation, after which 348 g of polydicylopentadiene was obtained. This polymer showed a softening point of 82°C and a number average molecular weight of 450 as determined on a vapor pressure osmometer.

(b) Preparation of Solution A and Solution B

To 100 ml of anhydrous VBH were added in nitrogen atmosphere 10 g of polydicyclopentadiene obtained in (a) of this Example, 0.2 ml of benzonitrile and 7.2 ml of the catalyst of Example 1(a), whereby solution A was provided.

Solution B was derived by admixing 100 ml of anhydrous VBH with 10 g of polydicyclopentadiene, 1.2 ml of isopropyl ether and 2.4 ml of the activator of Example 1(a) in nitrogen atmosphere.

(c) Polymerization/Molding

Solutions A and B were combined in nitrogen atmosphere, followed by rapid charge in a mold preheated at 70°C and by subsequent polymerization at this temperature for 2 minutes. The molded article after being released from the mold was post-cured as was in Example 1(c).

The resulting polysubstituted norbornene sample was measured for its physical properties with the results shown in Table 2.

Example 6

The procedure of Example 5 was followed except that 94.2 ml of anhydrous EBH was used instead of VBH in each of solutions A and B, thereby obtaining a norbornene sample with the properties tabulated.

Example 7

The procedure of Example 5 was followed except that VBH was replaced with 94.2 ml of anhydrous EBH in solution B. There was obtained a norbornene sample with the properties tabulated.

Example 8

The procedure of Example 5 was followed except that the amount of polydicyclopentadiene was changed to 20 g in each of solutions A and B and that solution A was further added with the same isoprene rubber as was in Example 4. The resulting norbornene sample showed the properties tabulated.

Comparative Example 3

The procedure of Example 5 was followed except that 98.5 ml of anhydrous dicyclopentadiene was substituted for both VBH and polydicyclopentadiene in each of solutions A and B, thereby obtaining a norbornene sample with the properties tabulated.

Comparative Example 4

The procedure of Example 5 was followed except that VBH was replaced with 78.5 ml of anhydrous dicyclo-pentadiene in each of solutions A and B. The resulting norbornene sample showed the properties tabulated.

It has been confirmed as is apparent from Table 2 that Examples 5 to 8 exhibit enhanced rigidity which is attributed to the use of VBH and/or EBH in combination with polydicyclopentadiene. Impact resistance was insufficient in the control of Comparative Example 4 in which dicyclopentadiene was combined with the specified coreactant polymer.

Having thus described the invention, it will be apparent to those versed in the art that many changes and modifications may be made to the invention without departing the scope of the appended claims.

Table 1

| Properties | Examples | | | | Comparative Examples | |
|---|---|---|---|---|---|---|
| | 1 | 2 | 3 | 4 | 1 | 2 |
| Bending strength* $kgf/cm^2$ | 560 | 572 | 561 | 410 | 551 | 402 |
| Bending modulus* $kgf/mm^2$ | 212 | 220 | 226 | 175 | 208 | 170 |
| Izod impact ** strength (notched) kgf·cm/cm | 17.2 | 15.1 | 16.8 | 79.2 | 10.3 | 48.2 |

*: JIS K7203
**: JIS K7110

Table 2

| Properties | Examples | | | | Comparative Examples | |
|---|---|---|---|---|---|---|
| | 5 | 6 | 7 | 8 | 3 | 4 |
| Bending strength* $kgf/cm^2$ | 690 | 681 | 677 | 669 | 551 | 607 |
| Bending modulus* $kgf/mm^2$ | 437 | 442 | 410 | 385 | 208 | 302 |
| Izod impact ** strength (notched) kgf·cm/cm | 12.6 | 12.1 | 13.3 | 19.9 | 10.3 | 6.1 |

* and **: same as in Table 1 !

## Claims

1. A process for producing a polysubstituted norbornene which comprises:

(a) combining a first reactive solution comprising a double-decomposing catalyst with a second reactive solution comprising an activator and a regulator, at least one of said first and second solutions containing as reactants 5-cinylbicyclo(2,2,1)hept-2-ene and/or 5-ethylidenebicyclo(2,2,1)hept-2-ene; and

(b) charging and polymerizing the admixture in a mold.

2. A process of claim 1 further including a dicyclopentadiene polymer added as a coreactant to at least either one of said first and second solutions.

3. A process of claim 1, said catalyst being selected from the group consisting of tungsten hexachloride and oxytungsten tetrachloride.

4. A process of claim 1, said activator being selected from the group consisting of triethylaluminum, triisobutylaluminum, diethylaluminum chloride, diisobutylaluminum chloride, ethylaluminum dichloride, n-butylaluminum dichloride and combinations thereof.

5. A process of claim 1, said regulator being selected from the group consisting of ethyl benzoate, isopropyl ether, butyl ether, methyl ethyl ketone, methyl isobutyl ketone, benzonitrile, ethyl alcohol and n-propyl alcohol.

6. A process of claim 1, said catalyst being used in an amount of 1/1,000 to 1/15,000 mole based on said reactants.

7. A process of claim 1, said activator being used in an amount of 1/100 to 1/2,000 mole based on said reactants.

8. A process of claim 1, said activator being used in an amount of 2 to 20 moles per mole of said catalyst.

9. A process of claim 1, said regulator being used in an amount of 1.5 to 5 moles per mole of said activator.

10. A process of claim 2, said coreactant being used in an amount of 2 to 100 parts by weight based on 100 parts by weight of said reactants.